# EUROPEAN PATENT APPLICATION

(11) **EP 4 733 543 A1**
(43) Date of publication of application: **29.04.2026**
(21) Application number: 24208380.6
(22) Date of filing: 23.10.2024
(51) Int. Cl.: E21C 35/22, E21B 7/02, E21B 21/01

(54) **METHOD FOR MONITORING DUST COLLECTOR PERFORMANCE, A DUST COLLECTING ARRANGEMENT OF A DRILLING APPARATUS AND A ROCK DRILLING RIG**

(71) Applicant: Sandvik Mining and Construction Oy, 33330 Tampere (FI)
(72) Inventor: UOTILA, Jarkko, 33330 Tampere (FI); VISKARI, Eero, 33330 Tampere (FI)
(74) Representative: Sandvik

(57) **Abstract**

Method for monitoring performance of a dust collector of a drilling apparatus, comprising:
- providing suction by a suction device for drawing air from a drill hole into a dust collector,
- collecting dust with a filter from the air drawn from the drill hole,
- monitoring input power of the suction device,
- transmitting input power data of the to a controller,
- selecting an action automatically by the controller if the input power is decreased.

## Description

### TECHNICAL FIELD

The present invention relates to a dust collecting arrangement of drilling apparatuses and to a method of monitoring dust collector performance.

### BACKGROUND OF THE ART

When rock and soil are drilled, drilling produces large amounts of dust. When a drill hole is typically flushed, for instance, with pressurized air, liquid or a combination thereof, the dust tends to spread to the environment along with the substance used for flushing. It is important to prevent the dust from spreading, not only from the viewpoint of occupational health of the drilling apparatus operator but also from the viewpoint of the environment, in particular when drilling takes place in the vicinity of densely populated areas or other settled areas, or in mines, for instance. For removal of dust from rock drilling rigs there have been developed various dust collecting arrangements wherewith dust is to be moved away from the drilling site and/or treated, for instance, by separating the discharge air for dusty rock material and other solids. Typically, the separation employs particular dust collectors, for instance.

When rock and soil are drilled, occasionally so-called water holes are encountered, i.e. the drill hole contains water that has leaked in either from outside the hole or through the bottom or walls of the hole. This causes problems in dust collecting arrangements, because access of water into a dust collector jeopardizes the operation of the apparatus. Because it is generally difficult to predict the occurrence of water holes, quick intervention in the problem requires constant presence and high alertness of the operator of the apparatus.

### OBJECTIVE

The objective of the method and the device is to alleviate the disadvantages mentioned above.

In particular, it is an objective to provide improved dust collecting arrangement for a drilling apparatus and an improved method for monitoring dust collector performance.

### SUMMARY

According to a first aspect, it is provided a method for monitoring performance of a dust collector of a drilling apparatus, comprising:
- providing suction by a suction device for drawing air from a drill hole into a dust collector,
- collecting dust with a filter from the air drawn from the drill hole,
- monitoring input power of the suction device,
- transmitting input power data to a controller,
- selecting an action automatically by the controller if the input power is decreased.

The advantage of the method is that maximum suction power may be maintained.

In an embodiment of the method, the action is shutting off the suction device if the input power is rapidly decreased.

In an embodiment of the method, the filter is cleaned during the drilling.

In an embodiment of the method, the action is increasing filter cleaning if the input power gradually decreasing.

In an embodiment of the method, the action is giving a notification to an operator when the input power is below pre-determined monitoring limit.

In an embodiment of the method, adjusting the suction flow provided by the suction device is controlled by adjusting rotation speed of the suction device.

According to a second aspect, it is provided a dust collecting arrangement of a drilling apparatus, comprising
- a suction device for generating suction and drawing air from a drill hole,
- a motor for providing power for the suction device,
- a dust collector,
- a filter inside the dust collector for collecting dust from the air drawn from the drill hole,
- filter cleaning means for cleaning the filter,
- a controller configured to monitor input power provided by the motor to the suction device and to control the filter cleaning means and the suction device based on the input power.

In an embodiment of the arrangement, the controller comprises a storage means for storing data.

In an embodiment of the arrangement, the storage means comprises input power data including at least one monitoring limit.

In an embodiment of the arrangement, the controller is configured to give a notification to an operator when the input power is below the monitoring limit.

In an embodiment of the arrangement, the controller is configured to increase the filter cleaning when input power gradually decreases below the monitoring limit.

In an embodiment of the arrangement, the controller is configured to turn off the suction device when the input power rapidly decreases.

In an embodiment of the arrangement, the suction device comprises control means for providing constant suction level.

In an embodiment of the arrangement, the control means is configured to control the rotation speed of the suction device.

In an embodiment of the arrangement, the motor is an electric motor.

In an embodiment of the arrangement, the motor is hydraulic motor, and the input power is defined by hydraulic pressure and volume flow of the motor.

According to a third aspect, it is provided a rock drilling rig comprising a dust collecting arrangement as described above.

It is to be understood that the aspects and embodiments of the invention described above may be used in any combination with each other. Several of the aspects and embodiments may be combined together to form a further embodiment of the invention.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig. 1** shows schematically a typical rock drilling rig 1 including a dust collecting arrangement,
**Fig. 2** shows an example of a dust collecting arrangement, and
**Fig. 3** shows a flow diagram of a method for monitoring performance of a dust collector of a drilling apparatus.

### DETAILED DESCRIPTION

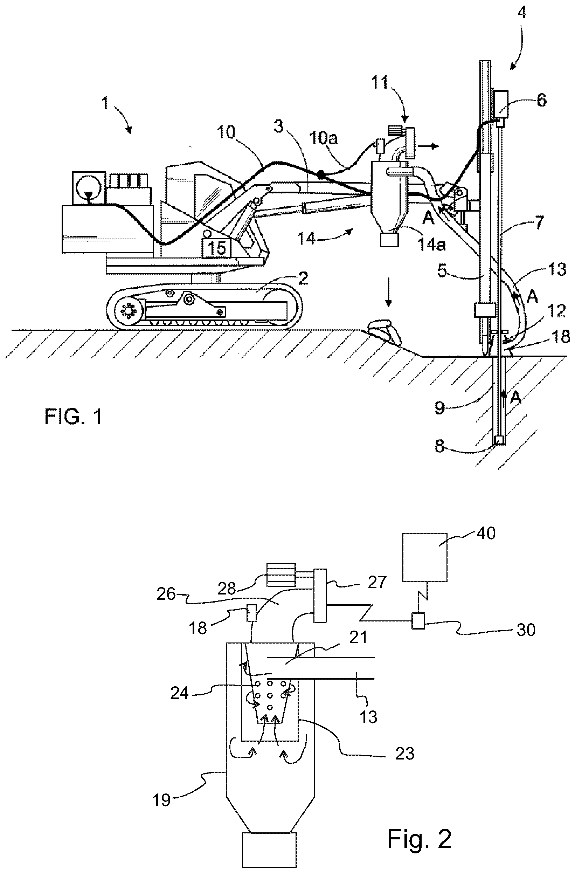

Figure 1 shows schematically a typical rock drilling rig 1 including a dust collecting arrangement. Said rock drilling rig 1 comprises a mobile carrier 2, in which there may be arranged one or more movable drill booms. In the drill boom 3 there may be arranged a drilling unit 4, which may include at least a feed beam 5 and a rock drill 6. The rock drill 6 may be moved on the feed beam 5 during drilling while a percussion device included in the rock drill 6 delivers impact pulses to a tool 7. Then a drill bit 8 at the distal end of the tool 7 breaks rock and the tool 7 penetrates in the rock. In the course of drilling, there is formed broken, partly dusty rock material that may be evacuated from the drill hole 9 by feeding from a flush medium channel 10 air, mixture of air and water or some other flush medium through the tool 7 to the drill bit 8. The flush medium pushes drill dust to the mouth of the drill hole, wherefrom it may be removed by means of a collection system included in the rock drilling rig 1. The rock drilling rig presented here is only one example of a typical rock drilling rig and the dust collecting arrangement set forth in this application may be well applied to various drilling apparatuses and systems without limiting to what is presented above.

In this application, the mixture to be removed from the drill hole and containing dust, rock and other material detached from rock during drilling, as well as flush medium, water and other material possibly mixing with rock material in the drill hole, are called drill cuttings.

Typically, the dust collecting arrangement of the rock drilling rig includes one or more suction apparatuses 11, wherewith it is possible to provide a necessary suction for sucking drill cuttings, including drill dust, from a suction funnel 12 at the mouth of the drill hole 9 along a suction duct 13 to a dust collector. There may be one or more dust collectors. Typically, the suction duct 13 is a flexible hose. The suction funnel 12 may be a tubular piece at the upper end and lower end of which there are openings such that a tool 7 may be fitted to pass through the suction funnel 12. In the flank of the suction funnel 12 there may be at least one connecting pipe 18 or another corresponding structure to which the suction duct 13 may be connected. Further, in connection with the suction funnel 12 there may be transfer means whereby it may be displaced in relation to the feed beam 5 such that the suction funnel 12 is transferable for the duration of drilling against the rock to be drilled such that dust will not be allowed to intrude into the environment. The dust collecting arrangement may further include at least one controller, by means of which e.g. the operation of the suction device may be controlled. The travel direction of the drill cuttings in the apparatus is indicated by arrow A.

In rock drilling, it is possible that in some situations water leaks into the drill hole from outside the hole or through the bottom or walls of the hole. In that case the water content in drill cuttings may rise significantly. Highly aqueous drill cuttings block the filters of the dust collecting arrangement and they may also cause blockages in the ducts and other structures and thus jeopardize the operation of the dust collecting arrangement.

Figure 2 shows an example of a dust collecting arrangement comprising a filter 24 having a combined coarse separator and fine separator. The dust collecting arrangement comprises a dust collector 14 that may form a closed casing 19. At the bottom of the body, there may be a conical section for collecting the rock material separated with the dust collector. The rock material to be separated can be brought along the suction channel 13 to the dust collector 14.

The dust collector may be for example a cyclone-separator wherein the rock material to be separated may be led substantially tangentially to the cyclone-separator, i.e. cyclone 22, that may be formed in the space between the inner surface of the casing 19 and an inner pipe 23 at the top of the dust collector. The centrifugal force affecting the coarse rock material is greater than that affecting the fine rock material, whereby the coarse rock material hits the inner surface of the casing 19 and then drops into the discharging part 14a. The fine rock material can in turn be sucked inside the inner pipe 23 and led to one or more filters 24 that allow air to flow through but retains solid matter.

The rock material attached to the surface of the filter element 24 can be detached by providing with the filter cleaning means 18 to the inside of the filter 24 a pressure pulse that makes the rock material drop into the discharging part 14a for further processing. The air passing through the filter 24 can lead to a discharge air channel 26 and released into the ambient air. The suction flow required by the dust collection arrangement can be generated with one or more suction devices 27, such as blowers, that can be used with a motor 28. The suction device 27 may be arranged into the discharge air channel 26 as shown in figure 2, or it may be arranged into the feed channel 21 before the dust collector 14.

The dust collector 14, as seen for example in figure 2, may comprise a coarse and fine separator integrated in a relatively small space. It can be arranged on the drilling boom 3 of the rock-drilling rig 1, as shown in Figure 1. The dust collector 14 is then close to the borehole 9 and the rock material need not be transported far in the suction channel 13. Further, the dust collecting arrangement is located far away from the control cabin to avoid exposing the operator to dust.

The dust collecting arrangement comprises a motor 28 for providing power to the suction device 27. The motor may be for example an electric motor or a hydraulic motor. When an electric motor is used, the input power may be received directly from an inverter of the motor. The input power data may be sent to a controller 40, which is configured to receive the input power data from the electric motor, and to control the filter cleaning means and the suction device based on the input power data. When hydraulic motor is used, the input power may be defined by the hydraulic pressure and the volume flow of the motor. Additionally or optionally, deviation in the input power may be defined by the level of the hydraulic pressure, especially when the rotation speed of the suction device is essentially constant.

The suction device 27 for generating suction and drawing air from the drill hole may be configured to provide constant suction flow so that deviation in the suction device's load, i.e. input power, can be recognized and utilized. The suction device may comprise a fan and the suction may be provided by rotating the fan. The constant suction flow may be provided with control means, which are configured to control the rotation speed of the fan of the suction device. The control means may be configured to control the motor providing the rotation to the fan of the suction device. For example, the rotation provided by a hydraulic motor may be controlled by adjusting the volume flow of the hydraulic fluid. The motor may be for example an axial piston-type hydraulic motor comprising a swash plate, and the rotation speed provided by the motor is controlled by displacing the swash plate.

The dust collecting arrangement may comprise a pressure sensor for monitoring the pressure level of the hydraulic motor and transmitting data of the pressure level. The data of the pressure level may be sent to a controller 40, which is configured to receive the pressure data from the pressure sensor and to control the filter cleaning means and the suction device based on the pressure data.

The controller may comprise storage means for storing data. The stored data may include at least one monitoring limit for input power. The controller may be configured to give a notification to an operator when the input power is below the monitoring level. The input power decrease may be caused by clogged filter. Thus, optionally or additionally, the controller may be configured to increase the filter cleaning when input power gradually decreases. Optionally or additionally, the controller 40 may be configured to turn off the suction device when the input power rapidly decreases. Rapidly decreased input power may indicate excess water in the drill hole and turning of the suction device may prevent possible damage that the water may cause to the dust collecting arrangement.

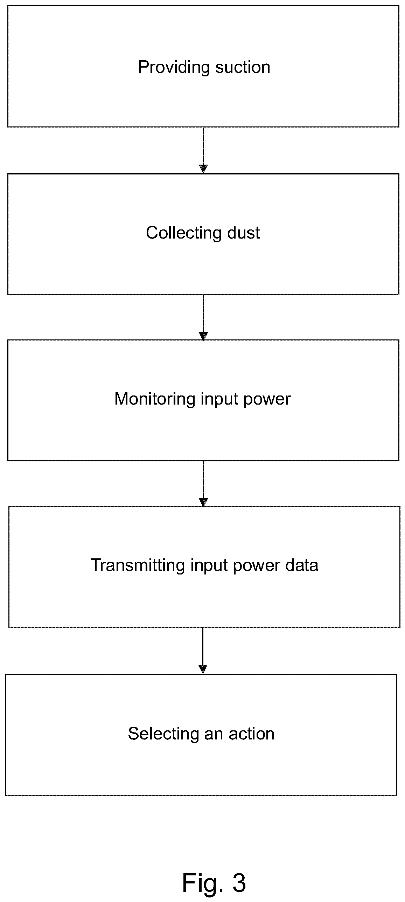

Figure 3 shows a flow chart of the method for monitoring performance of a dust collector of a drilling apparatus. The performance may be monitored by providing suction for drawing air from a drill hole into a dust collector, collecting dust with a filter from the air drawn from the drill hole, monitoring input power of the suction device, transmitting input power data of to a controller, selecting an action automatically by the controller if the input power is decreased.

The action may be at least one of turning off the suction device, increasing the filter cleaning, and giving a notification to an operator. For example, the suction device may be turned off when the input power is rapidly decreased. Rapidly decreased input power may indicate that water has leaked into the drill hole. If the input power decreases gradually, it usually means that the filter is getting clogged, and the cleaning of the filter should be increased. Alternatively or in addition to the automatic action mentioned above, a notification may be given to the operator who may perform the necessary action(s) when the input power drops below pre-determined monitoring level.

The suction device may be adjusted by controlling the rotation speed of the suction device, i.e. the fan, so that the suction flow may be kept constant and deviation in the input power may be recognized.

Although the invention has been the described in conjunction with a certain type of device, it should be understood that the invention is not limited to any certain type of device. While the present inventions have been described in connection with a number of exemplary embodiments, and implementations, the present inventions are not so limited, but rather cover various modifications, and equivalent arrangements, which fall within the purview of prospective claims.

## Claims

1. Method for monitoring performance of a dust collector of a drilling apparatus, comprising:
- providing suction by a suction device for drawing air from a drill hole into a dust collector,
- collecting dust with a filter from the air drawn from the drill hole,
- monitoring input power of the suction device,
- transmitting input power data to a controller,
- selecting an action automatically by the controller if the input power is decreased.

2. The method according to claim 1, wherein the action is shutting off the suction device if the input power is rapidly decreased.

3. The method according to claim 1 or 2, **characterized by** cleaning the filter during the drilling.

4. The method according to claim 3, wherein the action is increasing filter cleaning if the input power gradually decreasing.

5. The method according to any one of claims 1 to 4, wherein the action is giving a notification to an operator when the input power is below pre-determined monitoring limit.

6. The method according to any one of the preceding claims, wherein adjusting suction flow provided by the suction device is controlled by adjusting rotation speed of the motor.

7. A dust collecting arrangement of a drilling apparatus, comprising
- a suction device (27) for generating suction and drawing air from a drill hole (9),
- a motor (28) for providing power for the suction device,
- a dust collector (14),
- a filter (24) inside the dust collector for collecting dust from the air drawn from the drill hole,
- filter cleaning means (18) for cleaning the filter (24),
- a controller (40) configured to monitor input power provided by the motor to the suction device and to control the filter cleaning means and the suction device based on the input power.

8. The dust collecting arrangement according to claim 7, wherein the controller (40) comprises a storage means for storing data.

9. The dust collecting arrangement according to claim 8, wherein the storage means comprises input power data including at least one monitoring limit.

10. The dust collecting arrangement according to claim 9, wherein the controller (40) is configured to give a notification to an operator when the input power is below the monitoring limit.

11. The dust collecting arrangement according to any one of claims 7 to 10, wherein the controller (40) is configured to increase the filter cleaning when input power gradually decreases below the monitoring limit.

12. The dust collecting arrangement according to any one of claims 7 to 11, wherein the controller (40) is configured to turn off the suction device (27) when the input power rapidly decreases.

13. The dust collecting arrangement according to any one of claims 7 to 12, wherein the suction device (27) comprises control means for providing constant suction level.

14. The dust collecting arrangement according to claim 13, wherein the control means is configured to control the rotation speed of the suction device .

15. The dust collecting arrangement according to any one of claims 7 to 14, wherein the motor is an electric motor.

16. The dust collecting arrangement according to claim 13 or 14, wherein the motor is hydraulic motor, and the input power is defined by hydraulic pressure and volume flow of the motor.

17. A rock drilling rig comprising a dust collecting arrangement according to claim 7.
